# EUROPÄISCHE PATENTSCHRIFT

(11) **EP 2 517 129 B1**
(45) Veröffentlichungstag und Bekanntmachung des Hinweises auf die Patenterteilung: **24.05.2017**
(21) Anmeldenummer: 10810847.3
(22) Anmeldetag: 06.10.2010
(51) Int. Cl.: G06F 17/50

(54) **VERFAHREN UND PROZESSRECHNER ZUR BERECHNUNG DER ZUSTANDSGRÖSSEN EINES HYBRIDEN DIFFERENTIAL-ALGEBRAISCHEN PROZESSMODELLS**
METHOD AND SYSTEM FOR CALCULATING THE STATE VARIABLES OF A HYBRID DIFFERENTIAL-ALGEBRAIC PROCESS MODEL
PROCÉDÉ ET DISPOSITIF POUR DÉTERMINER LES VARIABLES D'ÉTAT D'UN MODÈLE DE PROCESSUS DIFFÉRENTIEL-ALGÉBRIQUE HYBRIDE

(43) Veröffentlichungstag der Anmeldung: 31.10.2012
(73) Patentinhaber: Art Systems Software GmbH, 33102 Paderborn (DE)
(72) Erfinder: CURATOLO, Daniel, 46145 Oberhausen (DE); HOFFMANN, Marcus, 46145 Oberhausen (DE); STEIN, Benno, 33102 Paderborn (DE)
(74) Vertreter: Gesthuysen Patent- und Rechtsanwälte
(86) Internationale Anmeldenummer: PCT/EP2010/006095
(87) Internationale Veröffentlichungsnummer: WO 2012/045322

(56) Entgegenhaltungen:
- "OVERVIEW OF MODELS FOR HYBRID SYSTEMS" In: TOMAS KRILAVICIUS ED - TOMAS KRILAVICIUS: "Hybrid Techniques for Hybrid Systems, Hybrid formalisms, Section 3", [Online] 1. Januar 2006 (2006-01-01), HYBRID TECHNIQUES FOR HYBRID SYSTEMS, UNIVERSITY OF TWENTE, THE NETHERLANDS, UNIVERSITY OF TWENTE, THE NETHERLANDS, PAGE(S) 30 - 50, XP002648732, Seiten 25-50, Gefunden im Internet: URL:http://doc.utwente.nl/57124/> das ganze Dokument Tabelle 3.3
- SCHAFT VAN DER A J ET AL: "Compositionality issues in discrete, continuous, and hybrid systems", INTERNATIONAL JOURNAL OF ROBUST AND NONLINEAR CONTROL, WILEY, CHICHESTER, GB, Bd. 11, Nr. 5, 30. April 2001 (2001-04-30) , Seiten 417-434, XP002635551, ISSN: 1049-8923, DOI: DOI:10.1002/RNC.591 [gefunden am 2001-04-03]
- NIKOUKHAH R ED - MACIEJOWSKI J M: "A hybrid system formalism for modeling and simulation", INTELLIGENT CONTROL, 2006 IEEE INTERNATIONAL SYMPOSIUM ON, IEEE, PI, 4. Oktober 2006 (2006-10-04), Seiten 1568-1573, XP031420286, ISBN: 978-0-7803-9797-2
- VALETTE R ET AL: "Modeling, simulation and control of event-driven operations in process systems", EMERGING TECHNOLOGIES AND FACTORY AUTOMATION, 1995. ETFA '95, PROCEEDI NGS., 1995 INRIA/IEEE SYMPOSIUM ON PARIS, FRANCE 10-13 OCT. 1995, LOS ALAMITOS, CA, USA,IEEE COMPUT. SOC, US, Bd. 3, 10. Oktober 1995 (1995-10-10), Seiten 119-128, XP010160442, DOI: DOI:10.1109/ETFA.1995.496713 ISBN: 978-0-7803-2535-7

## Beschreibung

Die Erfindung betrifft ein Verfahren zur Berechnung der Zustandsgrößen eines hybriden differential-algebraischen Prozessmodells (hybrides DAP = hDAP) in aufeinander folgenden Zeitschritten auf einem Prozessrechner mit einer Prozessschnittstelle, wobei der Prozessrechner so eingerichtet ist, dass über die Prozessschnittstelle wenigstens eine Prozessgröße eines physikalischen Prozesses von dem Prozessrechner erfaßt und/oder eine Ausgangsgröße zur Beeinflussung des physikalischen Prozesses ausgegeben werden kann und in einem Berechnungsprozess durch Auswertung der Zustandsgrößen ein aktueller Modus des hybriden DAP ermittelt wird, bei Abweichung des aktuellen Modus des hybriden DAP vom zuvor geltenden Modus des hybriden DAP ein dem aktuellen Modus entsprechendes ausführbares modusspezifisches Prozessmodell aus einer Gruppe ausführbarer modusspezifischer Prozessmodelle ausgewählt und der weiteren Berechnung zu Grunde gelegt wird. Die Erfindung betrifft ferner einen Prozessrechner mit einer Prozessschnittstelle zur Kopplung des Prozessrechners an einen physikalischen Prozess, wobei mit dem Prozessrechner über die Prozessschnittstelle wenigstens eine Prozessgröße eines physikalischen Prozesses erfassbar und/oder eine Ausgangsgröße zur Beeinflussung des physikalischen Prozesses ausgebbar ist.

Prozessrechner und auf Prozessrechnern auszuführende Verfahren der zuvor beschriebenen Art werden in technischen Aufgabenstellungen ganz allgemein dazu verwendet, einen physikalischen Prozess gezielt zu beobachten und/oder auf diesen physikalischen Prozess gezielt Einfluss zu nehmen, um ihn in gewünschter Weise zu beeinflussen. Häufig sind auf derartigen Prozessrechnern Prozessmodelle implementiert - also durch mathematische Gleichungen beschreibbare funktionale physikalisch-technische Zusammenhänge -, die beispielsweise zu Regelungszwecken ein mathematisches Modell des angeschlossenen physikalischen Prozesses darstellen, oder die einen von dem angeschlossenen physikalischen Prozess verschiedenen Prozess mathematisch nachbilden, der beispielsweise zur Anregung des "echten" physikalischen Prozesses ein Stück Wirklichkeit simuliert, wie dies beispielsweise von Simulatoren bekannt ist. Derartige Prozessrechner sind insbesondere aus dem Bereich der Steuergeräteentwicklung (Rapid-Control-Prototyping, Hardware-in-the-Loop-Tests) nicht mehr wegzudenken.

Je nach Art des auf dem Prozessrechner zu modellierenden und zu berechnenden Prozesses weist das Prozessmodell unterschiedliche mathematische Eigenschaften auf. Viele Prozessmodelle bestehen aus einem System von - linearen oder nichtlinearen - Differentialgleichungen, im einfachsten Fall aus einer einzigen Differentialgleichung. Diese Differentialgleichungen werden mit den bekannten numerischen Verfahren gelöst. Da der Prozessrechner üblicherweise mit einem echten physikalischen Prozess in Verbindung steht, ist es notwendig, das Prozessmodell in Echtzeit zu berechnen, so dass Prozessgrößen des physikalischen Prozesses in dem gewünschten Zeitraster - definiert durch die aufeinander folgenden Zeitschritte auf dem Prozessrechner - erfasst und weiterverarbeitet werden können, bzw. von dem Prozessrechner Ausgangsgrößen zur Beeinflussung des physikalischen Prozesses ausgegeben werden können.

Viele Prozessmodelle umfassen neben Differentialgleichungen oder Differentialgleichungssystemen auch algebraische Gleichungen, die typischerweise das Verhalten von Erhaltungsgrößen in dem Prozess beschreiben. Einfache Zusammenhänge dieser Art sind beispielsweise Ströme in Knoten eines elektrischen Netzwerks, die Energiekonstanz in einem System, der Volumenstrom eines inkompressiblen Mediums, die Impulserhaltung in einem Mehrkörpersystem und andere kinetische Nebenbedingungen. Derartige Modelle werden als differential-algebraische Prozessmodelle bezeichnet, im folgenden kurz "DAP".

DAP sind häufig strukturinvariant, d. h. dass die Zustandsgrößen des Prozessmodells so wie die Zusammenhänge zwischen den Zustandsgrößen a priori feststehen, sich das mathematische Gerüst als solches nicht ändert, weder über die Zeit noch in Abhängigkeit von anderen Bedingungen. Solche Systeme können aufgrund ihrer Strukturinvarianz vor Laufzeit der Berechnung in ein vollständiges algorithmisches Modell - z.B. in der Form von C-Code - überführt werden, und vor Berechnungsstart können die strukturinvarianten Modelle mit den bekannten mathematischen Methoden zur Minimierung des Rechnungsaufwandes optimiert werden, also beispielsweise durch BLT-Transformation, Tearing oder Sparse-Matrix-Verfahren. Aus dem laufzeitoptimierten algorithmischen Modell kann dann ein auf dem Prozessrechner ausführbares Prozessmodell erstellt werden, also beispielsweise durch Kompilation des oben angeführten C-Codes.

Komplexere Prozessmodelle sind jedoch häufig strukturvariant, sie verfügen über verschiedene Modi, die sich dadurch auszeichnen, dass z.B. verschiedene Zusammenstellungen von Zustandsgrößen oder unterschiedliche Zusammenhänge zwischen einer gleich bleibenden Auswahl an Zustandsgrößen die Funktionalität des Prozessmodells beschreiben, wobei diese unterschiedlichen Modi des Prozessmodells in Abhängigkeit von bestimmten Bedingungen aktiviert oder deaktiviert sind. Ein strukturvariantes differential-algebraisches Prozessmodell wird als hybrides DAP bezeichnet. Wenn die Bedingungen zweiwertig sind, dann weist ein hybrides DAP mit n Bedingungen insgesamt 2ⁿ mögliche Modi auf. In Abhängigkeit von den Zustandsgrößen des Prozessmodells werden also verschiedene Teile des hybriden DAP aktiviert oder deaktiviert, so dass ein spezieller Modus des hybriden DAP weniger komplex (im Sinne von umfassend) ist als das hybride DAP, das omnipotent ist und alle möglichen Modi umfasst.

In dem Aufsatz "Overview of Models for hybrid Systems" (in Krilavicius, T.: "Hybrid Techniques for hybrid Systems, Hybrid Formalisms, Section 3", Januar 2006, University of Twente, The Netherlands, Seiten 25 bis 50) wird der Stand der Technik in Bezug auf die Modellierung hybrider Systeme beschrieben; Tabelle 3.3 auf Seite 27 gibt einen Überblick über verschiedene Phänomene und Techniken bei der numerischen Behandlung hybrider Systeme.

In dem Aufsatz von Schaft, van der A.J. et al.: "Compositionality issues in discrete, continuous, and hybrid systems" (in "International Journal of Robust and Nonlinear Control", 2001, 11, Seiten 417 bis 434) wird die mathematische Behandlung hybrider Systeme in Zusammenhang mit Zustandsvariablen und booleschen Operatoren beschrieben. In Abschnitt 4.4 wird die mathematische Behandlung hybrider Systeme und die Formulierung sogenannter Event-FlowFormulas anhand eines Beispiels anschaulich erläutert.

Hybride DAP werden mit allen in ihnen vorkommenden, an die Zustandsgrößen geknüpften Bedingungen, die zu den unterschiedlichen Modi des hybriden DAP führen, in ein ausführbares, modus-unspezifisches Prozessmodell überführt, das dann dem Berechnungsprozess insgesamt zugrunde liegt. Die Komplexität eines solchen hybriden DAP birgt allein wegen der zum Teil erheblichen Größe derartiger Prozessmodelle erhebliche Schwierigkeiten in sich, insbesondere Schwierigkeiten hinsichtlich der Echtzeitberechenbarkeit. Dazu kommt, dass hybride DAP aufgrund der darin enthaltenen Fallunterscheidungen nicht gut mathematisch optimierbar sind, was für das Laufzeitverhalten ebenfalls nachteilig ist.

Um den Berechnungsprozess in jedem Zeitschritt auf Grundlage eines schlankeren, modusspezifischen Prozessmodells durchführen zu können, ist es denkbar, aus dem hybriden DAP alle möglichen modusspezifischen DAP zu extrahieren, wobei jedes dieser modusspezifischen DAP frei von Fallunterscheidungen und damit von allen nicht benötigten Teilen des hybriden DAP bereinigten ist, wodurch jedes modusspezifische DAP mit bekannten mathematischen Methoden optimierbar ist und in ein "schnelles" ausführbares modusspezifisches Prozessmodell überführbar ist. Die Gesamtheit aller möglichen ausführbaren modusspezifischen Prozessmodelle kann dann einer Gruppe ausführbarer modusspezifischer Prozessmodelle zugeführt werden. Diese Vorgehensweise ist in der Praxis problematisch, da die Gruppe der ausführbaren modusspezifischen Prozessmodelle äußerst groß sein kann (2ⁿ ausführbaren modusspezifischen Prozessmodelle bei n binären Fallunterscheidungen) und einen erheblichen Speicherbedarf mit sich bringt und zudem das Präprozessing des hybriden DAP sehr langwierig sein kann. Das gilt häufig auch dann, wenn vor der Echtzeitausführung die tatsächlich auftretenden Modi bekannt sind und nicht alle möglichen ausführbaren modusspezifischen Prozessmodelle, sondern nur bestimmte ausführbare modusspezifische Prozessmodelle extrahiert und erzeugt werden müssen.

In einem Berechnungsprozess wird dann durch Auswertung der Zustandsgrößen ein aktueller Modus des hybriden DAP ermittelt, bei Abweichung des aktuellen Modus des hybriden DAP vom zuvor geltenden Modus des hybriden DAP wird nachfolgend ein dem aktuellen Modus entsprechendes ausführbares modusspezifisches Prozessmodell aus der Gruppe der ausführbaren modusspezifischen Prozessmodelle ausgewählt und der weiteren Berechnung zu Grunde gelegt.

Der vorliegenden Erfindung liegt daher die Aufgabe zugrunde, ein Verfahren zur Berechnung der Zustandsgrößen eines hybriden DAP zur Verfügung zu stellen, mit dem eine schnelle Berechnung der verschiedenen Modi des hybriden DAP bei nach Möglichkeit reduzierter Speicherbelastung des Prozessrechners möglich ist.

Die hergeleitete und beschriebene Aufgabe ist bei dem zuvor erläuterten Verfahren zur Berechnung der Zustandsgrößen eines hybriden differential-algebraischen Prozessmodells dadurch gelöst, dass zur Laufzeit der Berechnung in einem Prädiktionsprozess durch Auswertung der Zustandsgrößen wenigstens ein wahrscheinlicher zukünftiger Modus des hybriden DAP ermittelt wird, aus dem hybriden DAP das dem ermittelten wahrscheinlichen zukünftigen Modus entsprechende modusspezifische DAP extrahiert wird, aus dem extrahierten modusspezifischen DAP ein ausführbares modusspezifisches Prozessmodell erzeugt und der Gruppe der ausführbaren modusspezifischen Prozessmodelle zugeführt wird, dass der Prädiktionsprozess simultan zum Berechnungsprozess ausgeführt wird, wobei der Berechnungsprozess und der Prädiktionsprozess auf unterschiedlichen Recheneinheiten ausgeführt werden.

In der vorgenannten Gruppe ausführbarer modusspezifischer Prozessmodelle werden solche modusspezifischen Prozessmodelle vorgehalten, deren zukünftige Verwendung auf Grundlage der aktuellen Werte der Zustandsgrößen als wahrscheinlich erscheinen. Die Gruppe kann auch nur ein einziges ausführbares modusspezifisches Prozessmodell enthalten, beispielsweise dann, wenn dieses modusspezifische Prozessmodell den einzig möglichen zukünftigen Folgemodus des hybriden DAP darstellt oder aber den überwiegend wahrscheinlichen Folgemodus des hybriden DAP.

Wenn beispielsweise davon ausgegangen wird, dass ein Motor mit zugehörigem Getriebestrang durch ein hybrides DAP auf dem Prozessrechner berechnet wird, so ist es denkbar, dass die verschiedenen Getriebestufen verschiedenen Modi des korrespondierenden hybriden DAP bilden. Wenn ferner davon ausgegangen wird, dass ein Gangwechsel üblicherweise einstufig erfolgt, sind vernünftige Annahmen für die zukünftig verwendeten Gänge und damit für die wahrscheinlichen zukünftigen Modi des hybriden DAP die direkt benachbarten Gangstufen der aktuell verwendeten Gangstufe.

In dem vorgenannten Prädiktionsprozess werden derartige Überlegungen berücksichtigt, die immer auf Auswertung der Zustandsgrößen des Prozessmodells fußen. Aus dem umfassenden hybriden DAP, in dem alle Fallgestaltungen Berücksichtigung finden, werden dann die den wahrscheinlich erscheinenden zukünftigen Modi entsprechenden modusspezifischen DAP extrahiert - möglicherweise wird auch nur ein einziges modusspezifisches DAP extrahiert -, wobei aus jedem extrahierten modusspezifischen DAP dann ein ausführbares modusspezifisches Prozessmodell erzeugt wird, also auf dem Prozessrechner ausführbarer Code.

Erfindungsgemäß ist vorgesehen, dass der Prädiktionsprozess simultan zum Berechnungsprozess ausgeführt wird. Gerätetechnisch wird dies realisiert, indem der Berechnungsprozess und der Prädiktionsprozess auf unterschiedlichen Recheneinheiten ausgeführt werden, insbesondere nämlich auf unterschiedlichen Recheneinheiten des Prozessrechners. Bei diesen Recheneinheiten kann es sich beispielsweise um verschiedene Prozessoren des Prozessrechners handeln oder aber auch um verschiedene Kerne eines Prozessors des Prozessrechners, wichtig ist lediglich, dass hier eine echte Parallelität des Berechnungsprozesses und des Prädiktionsprozesses durchführbar ist.

Prozessmodelle - welcher Art auch immer - werden auf Prozessrechnern mit Hilfe numerischer Verfahren in aufeinander folgenden Zeitschritten berechnet, wobei die Berechnung durchaus in unterschiedlichen Zeitrastern - Abtastfre-quenzen - vollzogen werden kann. Zu Anfang eines jeden Zeit- und damit Berechnungsschrittes müssen jedenfalls die der Berechnung zugrunde liegenden aktuellen Daten, also Werte der Zustandsgrößen, erfasst werden, die entweder Ergebnisse der zuvor berechneten Zeitschritte sind oder auch aktuell von dem Prozess über die Prozessschnittstelle erfasst worden sind. Ergebnis des Berechnungsprozesses innerhalb eines solchen Zeitschrittes ist dann ein neuer Satz von Zustandsgrößen, die ggf. zur Beeinflussung des angeschlossenen physikalischen Prozesses über die Prozessschnittstelle des Prozessrechners auch als Ausgangsgrößen ausgegeben werden.

Auf Grundlage der neu ermittelten, aktuellen Zustandsgrößen ist es dann möglich zu entscheiden, ob möglicherweise ein Moduswechsel vorliegt. Um den Prädiktionsprozess insgesamt auf einer einheitlichen Datenbasis durchzuführen, ist deshalb bei einer bevorzugten Ausgestaltung des Verfahrens vorgesehen, dass der Prädiktionsprozess auf Basis von konsistenten Zustandsgrößen erfolgt, also auf Basis eines Satzes von Zustandsgrößen, die aus einem gemeinsamen Zeitschritt stammen, nicht also auf Basis eines Satzes von Zustandsgrößen, die aus unterschiedlichen Zeitschritten stammen. Insbesondere kann hier vorgesehen sein, dass der Berechnungsprozess mit einer höheren Priorität ausgeführt wird als der Prädiktionsprozess, so dass jedenfalls in dem verwendeten Zeitraster aktuelle Zustandsdaten vorliegen, auch wenn der Prädiktionsprozess zurückgestellt wird. Dem liegt die Erfahrung zugrunde, dass meist eine Vielzahl von Zeit- und damit Berechnungsschritten für den Berechnungsprozess innerhalb eines Modus des hybriden DAP durchgeführt werden bevor es zu einem Moduswechsel kommt.

Gemäß einer weiteren bevorzugten Ausgestaltung des erfindungsgemäßen Verfahrens erfolgt die Auswertung der Zustandsgrößen innerhalb des Prädiktionsprozesses durch Extrapolation der Zustandsgrößen, indem also die vergangene Entwicklung der Zustandsgrößen durch entsprechende mathematische Extrapolationsverfahren in dem Bereich zukünftiger Zeitschritte des Berechnungsprozesses projiziert wird. Dies kann beispielsweise geschehen durch lineare Extrapolation oder auch durch polynomiale Extrapolation, wobei eine unterschiedliche Anzahl vorhergehender Werte der Zustandsgrößen herangezogen werden kann. Bei einer besonders vorteilhaften Variante des vorgenannten Verfahrens werden ausschließlich die modusrelevanten Zustandsgrößen zur Extrapolation herangezogen, also jene Zustandsgrößen, von denen die Bedingungen zur Umschaltung der unterschiedlichen Modi des hybriden DAP abhängen.

Bei einer weiteren besonders vorteilhaften Ausgestaltung des erfindungsgemäßen Verfahrens ist vorgesehen, dass solche zukünftigen Modi des hybriden DAP als wahrscheinlich eingestuft werden, die dem zuvor geltenden Modus benachbart sind. Dabei können solche Modi als benachbart gelten, die erfahrungsgemäß als Folgemodi auftreten, wie eingangs am Beispiel der Gangstufen eines Getriebes erläutert worden ist, es können aber auch ganz allgemein solche Modi als benachbart gelten, die durch kleinstmögliche Veränderungen von Zustandsgrößen erreicht werden. Dieses Verfahren ist insbesondere bei solchen Modi des hybriden DAP aussichtsreich, die durch fremdbestimmte Zustandsgrößen beeinflusst werden. Das können z B. Zustandsgrößen sein, die von einem Bediener abhängen und damit der Willkür des Bedieners unterstehen, oder auch solche Zustandsgrößen, die Zustandsgrößen des über die Prozessschnittstelle verbundenen physikalischen Prozesses sind und von dem Prozessrechner über die Prozessschnittstelle aufgenommen werden. Insoweit ist es hier besonders vorteilhaft, wenn solche Modi als dem zuvor geltenden Modus als benachbart angesehen werden, die durch kleinstmögliche Veränderungen der fremdbestimmten Zustandsgrößen erreicht werden.

Bei einer weiteren bevorzugten Ausgestaltung des die Erfindung ausmachenden Verfahrens ist vorgesehen, dass zu wahrscheinlichen zukünftigen Modi des hybriden DAP erzeugte ausführbare modusspezifische Prozessmodelle in der Gruppe belassen werden, so dass die Gruppe nicht nur die ganz aktuell ermittelten wahrscheinlichen zukünftigen Modi bzw. die mit diesen Modi korrespondierenden modusspezifischen Prozessmodelle enthält, sondern auch weitere ausführbare modusspezifische Prozessmodelle, die vergangenen, als wahrscheinlich ermittelten zukünftigen Modi entsprechen bzw. entsprochen haben. Diese Verfahrensvariante trägt dem Umstand Rechnung, dass die Ermittlung wahrscheinlicher zukünftiger Modi, insbesondere aber auch die Erzeugung ausführbarer modusspezifischer Prozessmodelle einen erheblichen Rechenaufwand mit sich bringt, der, so lange jedenfalls ausreichend Speicher auf dem Prozessrechner vorhanden ist, durch die vorbeschriebene Maßnahme reduziert werden kann. Dadurch wird insgesamt die Wahrscheinlichkeit vergrößert, dass der Berechnungsprozess und der Prädiktionsprozess beide gleichzeitig in Echtzeit ausgeführt werden können, so dass die Echtzeitanforderungen an das Verfahren mit größerer Wahrscheinlichkeit eingehalten werden kann. Von besonderem Vorteil ist es, wenn immer eine maximale Anzahl an ausführbaren modispezifischen Prozessmodellen in der Gruppe vorhanden - also vorgehalten - ist.

Trotz der fortwährenden Bestückung der Gruppe mit ausgewählten ausführbaren modusspezifischen Prozessmodellen besteht theoretisch die Möglichkeit, dass durch Auswertung der Zustandsgrößen ein aktueller Modus des hybriden DAP ermittelt wird, zu dem die Gruppe kein korrespondierendes ausführbares modusspezifisches Prozessmodell enthält, das demzufolge auch einer weiteren Berechnung nicht zugrunde gelegt werden kann. In diesem Fall ist vorgesehen, dass bei Fehlen des dem ermittelten aktuellen Modus des hybriden DAP entsprechenden ausführbaren modusspezifischen Prozessmodells in der Gruppe das dem ermittelten wahrscheinlichen zukünftigen Modus entsprechende modusspezifische DAP aus dem hybriden DAP extrahiert wird, aus dem extrahierten modusspezifischen DAP eine ausführbares modusspezifisches Prozessmodell erzeugt und verwendet wird, insbesondere auch der Gruppe zugeführt wird.

Zu dieser Weiterentwicklung des Verfahrens alternativ kann auch vorgesehen sein, dass zur Berechnung der Zustandsgrößen in den Zeitschritten, in denen das korrespondierende ausführbare modusspezifische Prozessmodell noch nicht aus dem hybriden DAP extrahiert worden ist, einfach das dem vollständigen hybride DAP entsprechende ausführbare Prozessmodell zur Berechnung der Zustandsgrößen heranzogen wird, auch wenn dies erheblich länger dauern kann als die Berechnung eines modusspezifischen ausführbaren Prozessmodells.

Schließlich ist die zuvor aufgezeigte Aufgabe bei dem eingangs beschriebenen Prozessrechner mit einer Prozessschnittstelle zur Kopplung des Prozessrechners an einen physikalischen Prozess auch dadurch gelöst, dass der Prozessrechner so ausgestaltet ist, dass er das erfindungsgemäße Verfahren und die zuvor beschriebenen bevorzugten Weiterentwicklungen des erfindungsgemäßen Verfahrens zur Berechnung der Zustandsgrößen eines hybriden differential-algebraischen Prozessmodells in aufeinander folgenden Zeitschritten ausführen kann.

Im Einzelnen gibt es nun eine Vielzahl von Möglichkeiten, das erfindungsgemäße Verfahren zur Berechnung der Zustandsgrößen eines hybriden Differential-algebraischen Prozessmodells auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: die gegenständliche Situation zur Anwendung des erfindungsgemäßen Verfahrens mit einem Prozessrechner, der über eine Schnittstelle mit einem physikalischen Prozess verbunden ist,
- Fig. 2: einen Teil des erfindungsgemäßen Verfahrens zur Berechnung der Zustandsgrößen eines hybriden differentialen-algebraischen Prozessmodells, insbesondere nämlich den Berechnungsprozess,
- Fig. 3: das Verfahren gemäß Fig. 2, ergänzt durch den Prädiktionsprozess des erfindungsgemäßen Verfahrens und
- Fig. 4: eine Ausgestaltung des erfindungsgemäßen Verfahrens für den Fall, dass die Gruppe ein benötigtes ausführbares modusspezifisches Prozessmodell nicht aufweist.

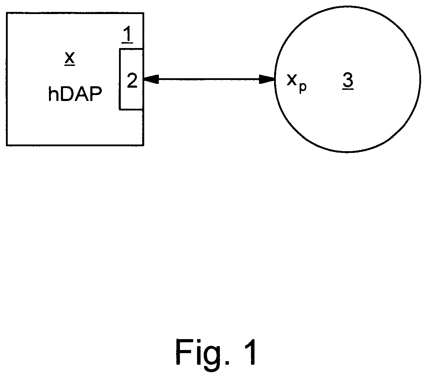

In Fig. 1 ist dargestellt ein Prozessrechner 1 mit einer Prozessschnittstelle 2, wobei der Prozessrechner 1 so eingerichtet ist, dass über die Prozessschnittstelle 2 wenigstens eine Prozessgröße xₚ eines physikalischen Prozesses 3 von dem Prozessrechner 1 erfasst und/oder eine - nicht ausdrücklich dargestellte - Ausgangsgröße zur Beeinflussung des physikalischen Prozesses 3 von dem Prozessrechner 1 ausgegeben werden kann. Dies ist die typische hardwaremäßige Situation, in der das nachfolgend im Detail erörterte Verfahren zur Berechnung der Zustandsgrößen x eines hybriden differential-algebraischen Prozessmodells hDAP in aufeinander folgenden Zeitschritten ausgeführt wird.

Die Menge der Zustandsgrößen x setzt sich zusammen aus Zustandsgrößen, die allein auf dem Prozessrechner zur Berechnung des hybriden differential-algebraischen Prozessmodells hDAP verwendet werden, die ihrerseits teilweise auch als Ausgangsgrößen zur Beeinflussung des physikalischen Prozesses 3 von dem Prozessrechner 1 ausgegeben werden können und solchen Zustandsgrößen xₚ, die Prozessgrößen des physikalischen Prozesses 3 sind, und demzufolge von dem physikalischen Prozess 3 stammen und dem Prozessrechner 1 über die Prozessschnittstelle 2 übermittelt werden.

Bei dem Prozessrechner 1 kann es sich beispielsweise um ein Steuergerät handeln, in dem zur Implementierung einer komplexen Regelungsaufgabe ein hybrides DAP hDAP berechnet wird. Bei dem Prozessrechner kann es sich aber auch um einen Simulator handeln, an den über die Prozessschnittstelle als Prozess 3 eine zu testende Hardwarekomponente (Device Under Test, DUT) - beispielsweise ein Steuergerät - angeschlossen ist, wobei der als Simulator fungierende Prozessrechner 3 quasi die Außenwelt des angeschlossenen physikalischen Prozesses 3 simuliert.

Da der physikalische Prozess 3 naturgemäß in Echtzeit abläuft, muss auch die Berechnung des hybriden DAP hDAP auf dem Prozessrechner 1 in Echtzeit erfolgen. Das bedeutet, dass das auf dem Prozessrechner 1 üblicherweise zur Anwendung kommende numerische Verfahren zur Berechnung des hybriden DAP hDAP in der durch die aufeinander folgenden Zeitschritte definierten Abtastfrequenz ausgeführt sein muss. Typische Abtastperiodendauern liegen im Bereich von Millisekunden und Bruchteilen davon. Um die Echtzeitanforderung erfüllen zu können, werden erhebliche Anstrengungen unternommen hinsichtlich der mathematischen Aufbereitung und Optimierung des hybriden DAP hDAP.

Eine Möglichkeit der mathematischen Behandlung des hybriden DAP auf dem Prozessrechner 1 besteht darin, die die Hybridität des DAP ausmachenden Bedingungen in dem Prozessmodell zu belassen und aus dem hybriden DAP ein ausführbares hybrides Prozessmodell (hDAPₑₓₑ) zu erzeugen. Dieses ausführbare hybride Prozessmodell hDAPₑₓₑ zur Berechnung der Zustandsgrößen ist auf der einen Seite zwar allumfassend, beinhaltet also jegliche Fallgestaltungen des hybriden Prozessmodells, ist auf der anderen Seite aber auch sehr umfangreich und rechenintensiv.

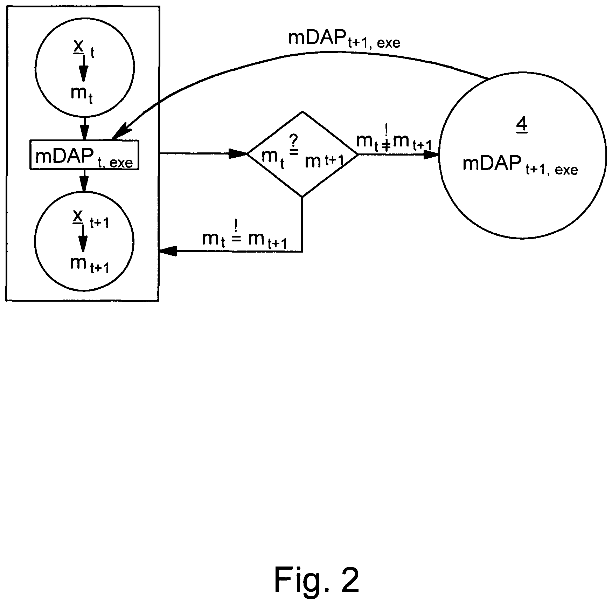

Aus dem vorgenannten Grund ist bei dem in den Fig. 2 bis 4 dargestellten Verfahren vorgesehen, dass zur Laufzeit der Berechnung in einem Berechnungsprozeß durch Auswertung der Zustandsgrößen x ein aktueller Modus mₜ₊₁ des hybriden DAP ermittelt, bei Abweichung des aktuellen Modus mₜ₊₁ des hybriden DAP vom zuvor geltenden Modus mₜ des hybriden DAP ein dem aktuellen Modus mₜ₊₁ entsprechendes ausführbares modusspezifisches Prozessmodell mDAP_{t+1, exe} aus einer Gruppe 4 ausführbarer modusspezifischer Prozessmodelle mDAPₑₓₑ ausgewählt und der weiteren Berechnung zugrunde gelegt wird.

Dem Berechnungsprozess liegt also der Gedanke zugrunde, dass nicht ein vollständiges ausführbares hybrides Prozessmodell hDAPₑₓₑ zur Berechnung der Zustandsgrößen x verwendet wird, sondern immer ein auf den jeweiligen benötigten Modus zugeschnittenes ausführbares modusspezifisches Prozessmodell mDAP_{t+1, exe}, das in der Gruppe 4 vorgehalten wird. Dieses modusspezifische Prozessmodell beinhaltet als Extrakt aus dem hybriden DAP hDAP keinerlei Bedingungen mehr, die eine Strukturvarianz des Gleichungssystems hervorrufen könnten. Demzufolge lässt sich ein ausführbares modusspezifisches Prozessmodell mDAP_{t+1, exe} sehr viel schneller ausführen, als ein ausführbares Gesamt-Prozessmodell hDAPₑₓₑ.

In Fig. 2 ist zu erkennen, dass in einem Zeitschritt der Berechnung aus den zuvor geltenden Zustandsgrößen xₜ die aktuellen Zustandsgrößen xₜ₊₁ berechnet werden, wobei die Werte der Zustandsgrößen xₜ, xₜ₊₁ über den zuvor geltenden Modus mₜ und den aktuellen Modus mₜ₊₁ entscheiden. Die Berechnung der aktuellen Zustandsgrößen xₜ₊₁ aus den zuvor geltenden Zustandsgrößen xₜ wird durchgeführt unter Zuhilfenahme des zu dem gegenwärtig erkannten Modus gehörenden ausführbaren modusspezifischen Prozessmodells mDAP_{t, exe}.

Nach einem Berechnungsschritt wird überprüft, ob der aktuelle Modus mₜ₊₁ des hybriden DAP hDAP übereinstimmt mit dem zuvor ermittelten Modus mₜ des hybriden DAP hDAP und bei einer Abweichung der beiden Modi wird das dem neuen aktuellen Modus mₜ₊₁ entsprechende ausführbare modusspezifische Prozessmodell mDAP_{t+1, exe} der Gruppe 4 entnommen und der weiteren Berechnung zugrunde gelegt, in Fig. 2 angedeutet durch den geschwungenen Pfeil zwischen Gruppe 4 und dem Berechnungsprozess.

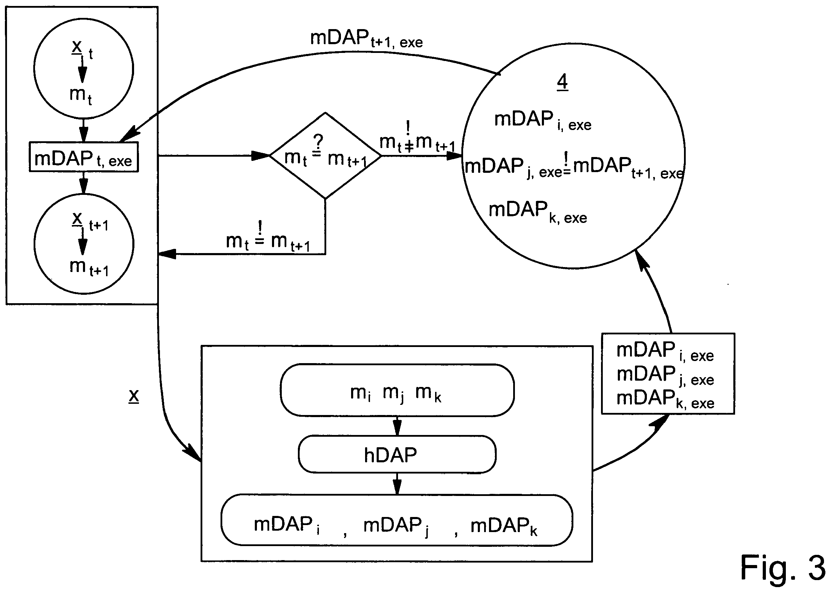

Weiterhin zeichnet sich das hier erörterte Verfahren auch durch einen Prädiktionsprozess aus, der in Fig. 3 in Ergänzung zu dem Berechnungsprozess aus Fig. 2 dargestellt ist. In dem Prädiktionsprozess wird durch Auswertung der Zustandsgrößen x wenigstens ein wahrscheinlicher zukünftiger Modus mᵢ, mⱼ, mₖ des hybriden DAP ermittelt, aus dem hybriden DAP hDAP wird das dem ermittelten wahrscheinlichen zukünftigen Modus mᵢ, mⱼ, mₖ entsprechende modusspezifische DAP mDAPᵢ, mDAPⱼ, mDAPₖ extrahiert, aus dem extrahierten modusspezifischen DAP mDAPᵢ, mDAPⱼ, mDAPₖ wird ein ausführbares modusspezifisches Prozessmodell mDAP_{i,exe}, mDAP_{j,exe}, mDAP_{k,exe} erzeugt und der Gruppe 4 zugeführt.

Wenn sich herausstellt, dass ein Moduswechsel stattgefunden hat, also ein Unterschied besteht zwischen dem zuvor geltenden Modus mₜ und dem aktuellen Modus mₜ₊₁, so wird - gemäß dem zuvor geschilderten Berechnungsprozess - überprüft, ob das dem aktuellen Modus mₜ₊₁ entsprechende ausführbare modusspezifische Prozessmodell mDAP_{t+1, exe} in der Gruppe 4 vorhanden ist. In Fig. 3 ist erkennbar, dass in der Gruppe 4 tatsächlich das erforderliche ausführbare modusspezifische Prozessmodell mDAP_{t+1, exe} vorhanden ist, nämlich in Form des ausführbaren modusspezifischen Prozessmodells mDAP_{j, exe}.

In Fig. 3 ist ebenfalls dargestellt, dass im Rahmen des Prädiktionsprozesses unter Kenntnis der wahrscheinlich zukünftigen Modi mᵢ, mⱼ, mₖ des hybriden DAP aus dem hybriden DAP hDAP die entsprechenden modusspezifischen DAP mDAPᵢ, mDAPⱼ, mDAPₖ extrahiert werden, was nichts anderes bedeutet, als dass das hybride DAP hDAP von allen die Hybridität des DAP ausmachenden Bedingungen bereinigt ist, und nur jene Teile des Prozessmodells erhalten bleiben, die zur Berechnung des entsprechenden Modus notwendig sind. Aus den extrahierten modusspezifischen DAP mDAPᵢ, mDAPⱼ, mDAPₖ, die beispielsweise in Form von C-Code vorliegen, werden dann ausführbare modusspezifische Prozessmodelle mDAP_{i,exe}, mDAP_{j,exe} und mDAP_{k,exe} erzeugt, vorliegend durch Kompilierung des C-Codes.

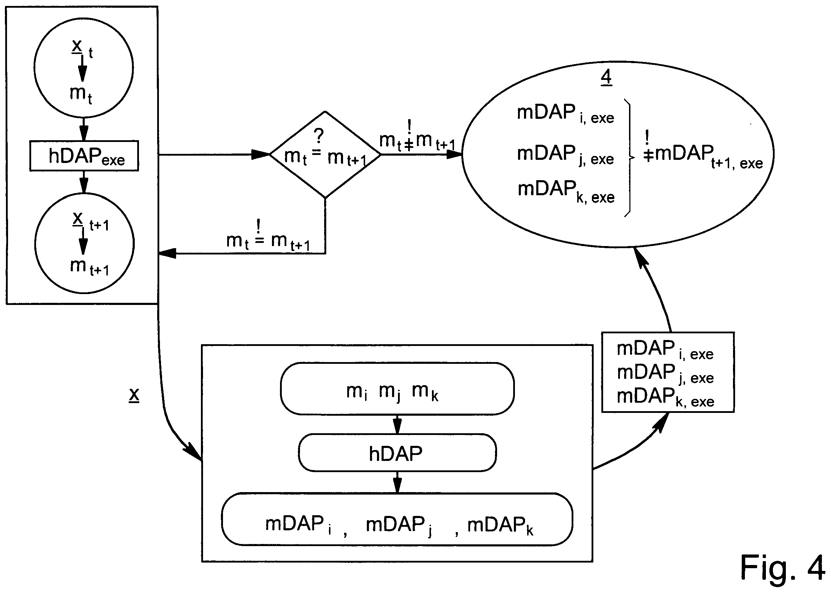

Es kann vorkommen, dass die Gruppe 4 nicht dasjenige ausführbare modusspezifische Prozessmodell enthält, das zur weiteren Berechnung benötigt wird. Diese Situation ist in Fig. 4 dargestellt, in der gezeigt ist, dass keines der Mitglieder der Gruppe 4, also die den wahrscheinlichen zukünftigen Modi mᵢ, mⱼ, mₖ entsprechenden ausführbaren modusspezifischen Prozessmodelle mDA-P_{i,exe}, mDAP_{j,exe}, mDAP_{k,exe} dem tatsächlich erforderlichen ausführbaren modusspezifischen Prozessmodell mDAP_{t+1,exe} entspricht. In diesem Fall wird als Ausweichlösung ausnahmsweise das ausführbare hybride Prozessmodell hDA-Pₑₓₑ zur Berechnung der Zustandsgrößen x verwendet, das zwar den Nachteil einer langsameren Berechnung mit sich bringt, jedoch garantiert, dass eine Berechnung in dem richtigen Modus erfolgt.

## Patentansprüche

1. Verfahren zur Berechnung der Zustandsgrößen (x) eines hybriden differential-algebraischen Prozessmodells (hybrides DAP, hDAP) in aufeinander folgenden Zeitschritten auf einem Prozessrechner (1) mit einer Prozessschnittstelle (2), wobei der Prozessrechner (1) so eingerichtet ist, dass über die Prozessschnittstelle (2) wenigstens eine Prozessgröße (xₚ) eines physikalischen Prozesses (3) von dem Prozessrechner (1) erfasst und eine Ausgangsgröße zur Beeinflussung des physikalischen Prozesses (3) von dem Prozessrechner (1) ausgegeben wird und in einem Berechnungsprozess durch Auswertung der Zustandsgrößen (x) ein aktueller Modus (mₜ₊₁) des hybriden DAP (hDAP) ermittelt wird, bei Abweichung des aktuellen Modus (mₜ₊₁) des hybriden DAP (hDAP) vom zuvor geltenden Modus (mₜ) des hybriden DAP (hDAP) ein dem aktuellen Modus (mₜ₊₁) entsprechendes ausführbares modusspezifisches Prozessmodell (mDAP_{t+1, exe}) aus einer Gruppe (4) ausführbarer modusspezifischer Prozessmodelle (mDAPₑₓₑ) ausgewählt und der weiteren Berechnung zu Grunde gelegt wird,
**dadurch gekennzeichnet,**
**dass** zur Laufzeit der Berechnung in einem Prädiktionsprozess durch Auswertung der Zustandsgrößen (x) wenigstens ein wahrscheinlicher zukünftiger Modus (mᵢ, mⱼ, mₖ) des hybriden DAP (hDAP) ermittelt wird, aus dem hybriden DAP (hDAP) das dem ermittelten wahrscheinlichen zukünftigen Modus (mᵢ, mⱼ, mₖ) entsprechende modusspezifische DAP (mDAPᵢ, mDAPⱼ, mDAPₖ) extrahiert wird, aus dem extrahierten modusspezifischen DAP (mDAPᵢ, mDAPⱼ, mDAPₖ) ein ausführbares modusspezifisches Prozessmodell (mDAP_{i, exe}, mDAP_{j, exe}, mDAP_{k, exe}) erzeugt und der Gruppe (4) zugeführt wird, dass der Prädiktionsprozess simultan zum Berechnungsprozess ausgeführt wird, wobei der Berechnungsprozess und der Prädiktionsprozess auf unterschiedlichen Recheneinheiten ausgeführt werden.

2. Verfahren nach Anspruch 1, **dadurch gekennzeichnet**, der Prädiktionsprozess und der Berechnungsprozess auf unterschiedlichen Recheneinheiten des Prozessrechners (1), insbesondere auf verschiedenen Prozessoren des Prozessrechners (1) ausgeführt werden.

3. Verfahren nach Anspruch 1 oder 2, **dadurch gekennzeichnet, dass** der Prädiktionsprozess auf Basis von konsistenten Zustandsgrößen erfolgt, insbesondere der Berechnungsprozess mit einer höheren Priorität ausgeführt wird als der Prädiktionsprozess.

4. Verfahren nach einem der Ansprüche 1 bis 3, **dadurch gekennzeichnet, dass** die Auswertung der Zustandsgrößen (x) innerhalb des Prädiktionsprozesses durch Extrapolation der Zustandsgrößen (x) erfolgt, insbesondere durch ausschließliche Extrapolation der modenrelevanten Zustandsgrößen.

5. Verfahren nach einem der Ansprüche 1 bis 4, **dadurch gekennzeichnet, dass** solche zukünftigen Modi (mᵢ, mⱼ, mₖ) des hybriden DAP (hDAP) als wahrscheinlich eingestuft werden, die dem zuvor geltenden Modus benachbart sind, insbesondere nämlich solche Modi, die durch kleinstmögliche Veränderung der Zustandsgrößen erreicht werden.

6. Verfahren nach einem der Ansprüche 1 bis 5, **dadurch gekennzeichnet, dass** zu ermittelten wahrscheinlichen zukünftigen Modi (mᵢ, mⱼ, mₖ) des hybriden DAP (hDAP) erzeugte ausführbare modusspezifische Prozessmodelle (mDAP_{i, exe}, mDAP_{j, exe}, mDAP_{k, exe}) in der Gruppe belassen werden, insbesondere bis eine maximale Anzahl an ausführbaren modusspezifischen Prozessmodellen in der Gruppe vorhanden ist.

7. Verfahren nach einem der Ansprüche 1 bis 6, **dadurch gekennzeichnet, dass** bei Fehlen des dem ermittelten aktuellen Modus (mₜ₊₁) des hybriden DAP (hDAP) entsprechenden ausführbaren modusspezifischen Prozessmodells (mDAP_{t+1, exe}) in der Gruppe das dem ermittelten wahrscheinlichen zukünftigen Modus (mₜ₊₁) entsprechende modusspezifische DAP (mDAPₜ₊₁) aus dem hybriden DAP (hDAP) extrahiert wird, aus dem extrahierten modusspezifischen DAP (mDAPₜ₊₁) ein ausführbares modusspezifisches Prozessmodell (mDAP_{t+1, exe}) erzeugt und verwendet wird, insbesondere auch der Gruppe zugeführt wird.

8. Verfahren nach einem der Ansprüche 1 bis 6, **dadurch gekennzeichnet, dass** bei Fehlen des dem ermittelten aktuellen Modus (mₜ₊₁) des hybriden DAP (hDAP) entsprechenden ausführbaren modusspezifischen Prozessmodells (mDAP_{t+1, exe}) in der Gruppe das ausführbares hybrides Prozessmodell (hDA-Pₑₓₑ) zur Berechnung der Zustandsgrößen (x) verwendet wird.

9. Prozessrechner (1) mit einer Prozessschnittstelle (2) zur Kopplung des Prozessrechners (1) an einen physikalischen Prozess (4), wobei mit dem Prozessrechner (1) über die Prozessschnittstelle (2) wenigstens eine Prozessgröße (xₚ) des physikalischen Prozesses erfassbar und eine Ausgangsgröße zur Beeinflussung des physikalischen Prozesses (4) ausgebbar ist,
**dadurch gekennzeichnet,**
**dass** der Prozessrechner (1) so ausgestaltet ist, dass er das Verfahren zur Berechnung der Zustandsgrößen (x) eines hybriden differential-algebraischen Prozessmodells (hDAP) in aufeinander folgenden Zeitschritten gemäß einem der Ansprüche 1 bis 8 ausführen kann.

## Claims

1. Method for computation of the state variables (x) of a hybrid differential-algebraic process model (hybrid DAP, hDAP) in successive time steps on a process computer (1) with a process interface (2), wherein the process computer (1) is configured such that at least one process variable (xₚ) of a physical process (3) is detected by the process computer (1) and an output variable is output by the process computer for influencing the physical process (3) and a current mode (mₜ₊₁) of the hybrid DAP (hDAP) is determined in a computation process by evaluating state variables (x), in the case of deviation of the current mode (mₜ₊₁) of the hybrid DAP (hDAP) from a prior mode (mₜ) of the hybrid DAP (hDAP), an executable mode-specific process model (mDAP_{t+1, exe}) corresponding to the current mode (mₜ₊₁) is chosen from a group of executable mode-specific process models (mDAPₑₓₑ) and is used to form the basis of a further computation,
**characterized in**
**that** at least one probable future mode (mᵢ, mⱼ, mₖ) of the hybrid DAP (hDAP) is determined by evaluating the state variables (x) for the running time of the computation in a prediction process, the mode-specific DAP (mDAPᵢ, mDAPⱼ, mDAPₖ) corresponding the determined probable future mode (mᵢ, mⱼ, mₖ) is extracted from the hybrid DAP (hDAP), an executable mode-specific process model (mDAP_{i, exe}, mDAP_{j, exe}, mDAP_{k, exe}) is produced from the extracted mode-specific DAP (mDAPᵢ, mDAPⱼ, mDAPₖ) and supplied to the group (4), that the prediction process is executed simultaneously with the computation process, wherein the computation process and the prediction process are carried out on different computing units.

2. Method according to claim 1, **characterized in that** the prediction process and the computation process are carried out on different computing units of the process computer (1), in particular on different processors of the process computer (1).

3. Method according to claim 1 or 2, **characterized in that** the prediction process is performed based on consistent state variables, in particular, the computation process is carried out with a higher priority than the prediction process.

4. Method according to any one of claims 1 to 3, **characterized in that** the state variables (x) are evaluated within the prediction processes by extrapolation of the state variables (x), in particular by only extrapolating mode-relevant state variables.

5. Method according to any one of claims 1 to 4, **characterized in that** those future modes (mᵢ, mⱼ, mₖ) of the hybrid DAP (hDAP) which are adjacent to the previous mode, in particular, namely, such modes that are achieved by the smallest possible change of the state variables are classified as probable.

6. Method according to any one of claims 1 to 5, **characterized in that** executable mode-specific process models (mDAP_{i, exe}, mDAP_{j, exe}, mDAP_{k, exe}) which have been produced for determined probable future modes (mᵢ, mⱼ, mₖ) of the hybrid DAP (hDAP) are left in the group, in particular until a maximum number of executable mode-specific process models are provided in the group.

7. Method according to any one of claims 1 to 6, **characterized in that**, in the absence of a executable mode-specific process model (mDAP_{t+1, exe}) which corresponds to the determined current mode (mₜ₊₁) of the hybrid DAP (hDAP) in the group, the mode-specific DAP (mDAPₜ₊₁) corresponding to the determined probable future mode (mᵢ, mⱼ, mₖ) is extracted from the hybrid DAP (hDAP), and wherein an executable mode-specific process model (mDAP_{t+1, exe}) is produced from the extracted mode-specific DAP (mDAPₜ₊₁) and is used, in particular is supplied to the group.

8. Method according to any one of claims 1 to 6, **characterized in that**, in the absence of an executable mode-specific process model (mDAP_{t+1, exe}) which corresponds to the determined current mode (mₜ₊₁) of the hybrid DAP (hDAP) in the group, an executable hybrid process model (hDAPₑₓₑ) is used to compute the state variables (x).

9. Process computer (1) with a process interface (2) for coupling the process computer (1) to a physical process (4), wherein at least one process variable (xₚ) of the physical process can be detected by the process computer (1) via the process interface (2) and an output variable can be output for influencing the physical process (4),
**characterized in**
**that** the process computer (1) is configured such that it can carry out the method for computation of the state variables (x) of a hybrid differential-algebraic process model (hDAP) in successive time steps according to any one of claims 1 to 8.

## Revendications

1. Procédé de calcul des grandeurs d'état (x) d'un modèle de processus différentiel algébrique hybride (DAP hybride, hDAP), qui est exécuté lors d'étapes temporelles successives sur un calculateur de processus (1) équipé d'une interface de processus (2), dans lequel le calculateur de processus (1) est conçu de manière à ce qu'au moins une grandeur de processus (xₚ) d'un processus physique (3) soit détecté par le calculateur de processus (1) par l'intermédiaire de l'interface de processus (2) et à ce qu'une grandeur de sortie destinée à influencer le processus physique (3) soit fournie en sortie par le calculateur de processus (1) et à ce que, lors d'un processus de calcul, un mode actuel (mₜ₊₁) du DAP hybride (hDAP) soit déterminé par évaluation des grandeurs d'état (x), si le mode actuel (mₜ₊₁) du DAP hybride (hDAP) est différent du mode antérieurement valide (mₜ) du DAP hybride (hDAP), un modèle de processus (mDAP_{t+1,exe}) spécifique du mode, exécutable et correspondant au mode actuel (mₜ₊₁), est sélectionné dans un groupe (4) de modèle de processus spécifiques du mode et exécutables (mDAPₑₓₑ) et sert de base pour la suite des calculs,
**caractérisé en ce que**, à l'instant d'exécution du calcul, lors d'un processus de prédiction, au moins un mode futur probable (mᵢ, mⱼ, mₖ) du DAP hybride (hDAP) est déterminé dans un processus de prédiction par évaluation des grandeurs d'état (x), **en ce que** le DAP (mDAPᵢ, mDAPⱼ, mDAPₖ), spécifique du mode et correspondant au futur mode probable (mᵢ, mⱼ, mₖ) déterminé est extrait du DAP hybride (hDAP), **en ce qu'**un modèle de processus spécifique du mode et exécutable (mDAP_{i,exe}, mDAP_{j,exe}, mDAP_{k,exe}) est généré à partir du DAP spécifique du mode et extrait (mDAPᵢ, mDAPⱼ, mDAPₖ) et est ajouté au groupe (4), **en ce que** le processus de prédiction est exécuté en même temps que le processus de calcul, dans lequel le processus de calcul et le processus de prédiction sont exécutés sur des unités de calcul différentes.

2. Procédé selon la revendication 1, **caractérisé en ce que** le processus de prédiction et le processus de calcul sont exécutés sur différentes unités de calcul du calculateur de processus (1), notamment sur différents processeurs du calculateur de processus (1).

3. Procédé selon la revendication 1 ou 2, **caractérisé en ce que** le processus de prédiction est effectué sur la base de grandeurs d'état cohérentes, notamment **en ce que** le processus de calcul est exécuté avec une priorité plus élevée que le processus de prédiction.

4. Procédé selon l'une quelconque des revendications 1 à 3, **caractérisé en ce que** l'évaluation des grandeurs d'état (x) s'effectue au sein du processus de prédiction par extrapolation des grandeurs d'état (x), notamment par extrapolation exclusive des grandeurs d'état liées au mode.

5. Procédé selon l'une quelconque des revendications 1 à 4, **caractérisé en ce que** les modes futurs (mᵢ, mⱼ, mₖ) du DAP hybride (hDAP) classés comme étant probables sont ceux qui sont voisins du mode antérieurement valide, et plus précisément, **en ce qu'**il s'agit des modes qui sont atteints par une modification la plus faible possible des grandeurs d'état.

6. Procédé selon l'une quelconque des revendications 1 à 5, **caractérisé en ce que**, pour de futurs modes probables déterminés (mᵢ, mⱼ, mₖ) du DAP hybride (hDAP), des modèles de processus spécifiques du mode exécutables et générés (mDAP_{i,exe}, mDAP_{j,exe}, mDAP_{k,exe}) sont admis dans le groupe, notamment jusqu'à ce qu'un nombre maximum de modèles de processus spécifiques du mode et exécutables soient présents dans le groupe.

7. Procédé selon l'une quelconque des revendications 1 à 6, **caractérisé en ce qu'**en l'absence du modèle de processus spécifique du mode et exécutable (mDAP_{t+1,exe}) dans le groupe correspondant au mode actuel déterminé (mₜ₊₁) du DAP hybride (hDAP), le DAP spécifique du mode (mDAPₜ₊₁) correspondant au futur mode probable (mₜ₊₁) déterminé est extrait du DAP hybride (hDAP), **en ce qu'**un modèle de processus spécifique du mode et exécutable (mDAP_{t+1,exe}) est généré à partir du DAP spécifique du mode et extrait (mDAP_{t+1,exe}) et **en ce qu'**il est utilisé, en étant notamment également ajouté au groupe.

8. Procédé selon l'une quelconque des revendications 1 à 6, **caractérisé en ce que**, en l'absence du modèle de processus spécifique du mode et exécutable (mDAP_{t+1,exe}) dans le groupe, et correspondant au mode actuel déterminé (mₜ₊₁) du DAP hybride (hDAP), le modèle de processus hybride exécutable (hDAPₑₓₑ) est utilisé pour calculer les grandeurs d'état (x).

9. Calculateur de processus (1) équipé d'une interface de processus (2) destinée à coupler le calculateur de processus (1) à un processus physique (4), dans lequel au moins une grandeur de processus (xₚ) du processus physique peut être détectée à l'aide du calculateur de processus (1) par l'intermédiaire de l'interface de processus (2) et en ce qu'une grandeur de sortie peut être fournie en sortie pour influencer le processus physique (4),
**caractérisé en ce que** le calculateur de processus (1) est conçu de manière à pouvoir mettre en oeuvre le procédé de calcul des grandeurs d'état (x) d'un modèle de processus algébrique différentiel hybride (hDAP) lors d'étapes temporelles consécutives selon l'une quelconque des revendications 1 à 8.
